(19) Europäisches Patentamt
European Patent Office
Office européen des brevets

(11) **EP 2 872 457 B1**

(12) **FASCICULE DE BREVET EUROPEEN**

(45) Date de publication et mention de la délivrance du brevet:
**09.01.2019 Bulletin 2019/02**

(21) Numéro de dépôt: **13744734.8**

(22) Date de dépôt: **11.07.2013**

(51) Int Cl.:
*C03C 17/00* (2006.01)    *C08J 7/06* (2006.01)
*C09D 183/06* (2006.01)

(86) Numéro de dépôt international:
**PCT/FR2013/051663**

(87) Numéro de publication internationale:
**WO 2014/009667 (16.01.2014 Gazette 2014/03)**

(54) **VITRAGE TRANSLUCIDE COMPRENANT AU MOINS UN MOTIF, DE PREFERENCE TRANSPARENT**

TRANSPARENTE VERGLASUNG MIT MINDESTENS EINEM BEVORZUGT TRANSPARENTEN MUSTER

TRANSLUCENT GLAZING COMPRISING AT LEAST ONE PATTERN THAT IS PREFERABLY TRANSPARENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 FR 1256768**

(43) Date de publication de la demande:
**20.05.2015 Bulletin 2015/21**

(73) Titulaire: **Saint-Gobain Glass France**
**92400 Courbevoie (FR)**

(72) Inventeurs:
• **EHRENSPERGER, Marie-Virginie**
**F-73100 Aix-les-bains (FR)**
• **GUILLEMOT, François**
**F-75019 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A1- 0 661 558       WO-A2-2010/112786
WO-A2-2010/112788   DE-A1- 19 828 231
US-A1- 2003 146 415   US-A1- 2008 193 721
US-B1- 6 358 612**

EP 2 872 457 B1

**Description**

La présente invention concerne un vitrage, de préférence translucide, comprenant au moins un motif, de préférence transparent, et un procédé de fabrication d'un tel vitrage translucide.

Selon l'invention, on entend par « motif », une forme définie sur une partie de la surface d'un substrat. Cette partie de la surface du vitrage définissant le motif présente des propriétés de réflexion, d'absorption et/ou de transmission différentes de celles des autres parties de surface du vitrage qui entourent le motif.

Il existe actuellement des vitrages transparents comprenant au moins un motif translucide. Plusieurs techniques sont utilisées pour obtenir de tels vitrages. L'une de ces techniques consiste à coller un film plastique diffusant découpé selon le motif souhaité sur le vitrage. Cette technique, pourtant simple de mise en oeuvre, présente une faible durabilité. En effet, de tels vitrages présentent très rapidement, et a fortiori selon l'emplacement du vitrage (exposition UV), un aspect esthétique de moindre qualité dû notamment au vieillissement de type jaunissement et/ou décollement du film plastique diffusant.

D'autres techniques utilisent des masques et des substrats en verre comprenant deux surfaces externes lisses.

Une de ces techniques consiste à réaliser les motifs par texturation d'une partie de la surface du substrat. Les motifs sont obtenus par application d'un masque sur l'une des surfaces externes du substrat suivie d'une étape d'attaques chimiques ou mécaniques de ladite surface au travers dudit masque. Cependant, l'obtention d'un motif par texturation d'un verre lisse présente plusieurs inconvénients notamment en termes de coût. Les masques utilisés pour protéger les parties de la surface du substrat sur lesquelles une bonne transparence doit être conservée doivent être eux-mêmes en des matériaux résistants vis-à-vis des conditions d'attaques chimiques ou mécaniques du substrat. Ces exigences en termes de résistance nécessitent l'utilisation de matériaux ayant un coût élevé. De plus, ces procédés impliquent la succession de trois étapes qui doivent être réalisées tôt dans la chaine de transformation. En effet, si l'on souhaite réaliser un substrat translucide par endroit par attaques acides, il faut d'abord mettre une protection sur le substrat, réaliser les attaques acides et enlever la protection. Le choix du motif doit donc être réalisé avant l'étape d'attaque du substrat pour le rendre translucide.

Une autre technique consiste à déposer sur l'une des surfaces lisses du substrat, une couche d'émail translucide de type Emalite® par exemple au travers d'un masque. Le dépôt d'une telle couche présente l'inconvénient de devoir être recuit à haute température. Le vitrage ainsi obtenu est donc généralement trempé après application du motif. Ce procédé impose alors généralement d'être réalisé une fois la dimension du vitrage fixée.

L'utilisation de masques limite le choix des motifs car ils ne permettent pas de réaliser toutes sortes de motifs. Par exemple, il est parfois impossible de réaliser sur certains masques des trous de faible diamètre. Par conséquent, de tels masques ne permettent pas d'obtenir des motifs de faibles dimensions.

WO 2010/112786 et WO 2010/112788 décrivent des vitrages ayant un substrat texturé revêtu d'une couche sol-gel.

La présente invention vise la mise au point d'un vitrage translucide comprenant au moins un motif et un procédé de fabrication d'un tel vitrage translucide ne présentant pas les inconvénients de l'art antérieur. En particulier, la présente invention vise un procédé présentant les avantages suivants :

- simplicité de mise en oeuvre et coût de fabrication abaissé,
- obtention de motifs décoratifs multiples de formes complexes et variées, non réalisables par d'autres techniques,
- grande flexibilité quant au choix des substrats constituant le vitrage.

Le demandeur a mis au point un nouveau procédé de fabrication d'un vitrage translucide pouvant comprendre des motifs satisfaisant ces exigences.

L'invention concerne donc un vitrage comprenant un substrat ayant deux surfaces principales externes, dont l'une au moins est une surface texturée, constitué en un matériau diélectrique ayant un indice de réfraction $n_1$ caractérisé en ce que :

- au moins une partie de la surface texturée du substrat est revêtue par une couche sol-gel constituée en un matériau diélectrique ayant un indice de réfraction $n_2$,
- la valeur absolue de la différence d'indice de réfraction à 589 nm entre les matériaux diélectriques constitutifs du substrat et de la couche sol-gel est inférieure ou égale à 0,020.

De préférence, le substrat a deux surfaces principales externes, dont l'une au moins est une surface texturée et l'autre est une surface lisse. Le vitrage comprenant un substrat ayant deux surfaces principales externes, dont l'une au moins est une surface texturée est un vitrage translucide.

L'invention concerne également le procédé de fabrication d'un tel vitrage caractérisé en ce que :

- on fournit un substrat comprenant une surface texturée d'indice de réfraction n1,
- on choisit et on dépose sur au moins une partie de la surface texturée du substrat, une couche sol-gel constituée en un matériau diélectrique ayant un indice de réfraction n2 et dont la valeur absolue de la différence d'indice de réfraction à 589 nm entre les matériaux diélectriques constitutifs du substrat et de la couche sol-gel est inférieure ou égale à 0,020, de préférence inférieure ou égale 0,015.

Selon l'invention, une surface texturée ou rugueuse est une surface pour laquelle les propriétés de surface varient à une échelle plus grande que la longueur d'onde du rayonnement incident sur la surface. La présence de cette texturation a pour effet qu'un rayonnement incident sur cette surface avec un angle d'incidence donné est réfléchi et transmis par cette surface dans une pluralité de directions. Ce rayonnement incident est transmis et réfléchi de manière diffuse par la surface. La texture ou rugosité de la surface texturée du substrat est formée par une pluralité de motifs en creux ou en saillie, périodique, apériodique, aléatoire, par rapport à un plan général de la surface texturée du substrat.

Une surface texturée ou rugueuse selon l'invention présente par exemple un paramètre de rugosité Ra d'au moins 0,5 $\mu$m correspondant à la moyenne arithmétique de toutes les distances absolues du profil de rugosité R mesurée à partir d'une ligne médiane du profil sur une longueur d'évaluation. Pour définir la texturation du substrat, on peut utiliser en complément le paramètre de rugosité RSm qui est la valeur moyenne des largeurs des éléments du profil. Le paramètre RSm peut ainsi aller de 10 $\mu$m à 100 $\mu$m, encore plus préférentiellement de 10 à 65 $\mu$m.

L'épaisseur définie entre le creux le plus bas et la saillie ou crête la plus haute correspond à la valeur ou hauteur appelée pic à vallée (« Pic to valley »). Selon l'invention, l'épaisseur de la couche sol-gel est définie à partir du creux le plus bas de la surface texturée du substrat.

La détermination des paramètres de rugosité est définie dans la norme NF EN ISP 4287. Ces paramètres de rugosités peuvent être mesurés de différentes manières :

- par profilométrie optique, selon le principe de la microscopie chromatique à champ étendu, par exemple à l'aide de la station de base MIM2 de la société STIL,
- par interférométrie optique par exemple à l'aide de l'appareil NEWVIEW de la société ZIGO, ou
- par un système mécanique à pointe (utilisant par exemple les instruments de mesure commercialisés par la société VEECO sous la dénomination DEKTAK.

Une surface texturée comprenant une couche sol-gel correspond donc à une partie de la surface texturée du substrat sur laquelle la couche sol-gel a été déposée et comble au moins une partie de la rugosité du substrat.

L'utilisation spécifique d'une couche sol-gel selon l'invention comprenant un indice sensiblement égal à celui du substrat texturé permet d'obtenir différents effets selon la nature mais surtout l'épaisseur de la couche sol-gel appliquée sur le substrat.

Selon un mode de réalisation, le procédé de l'invention permet d'obtenir de nouveaux motifs texturés, c'est-à-dire des motifs présentant une texturation différente de celle du substrat texturé utilisé comme matériaux de départ. Le procédé de l'invention permet donc de réaliser différentes textures à partir d'un même substrat texturé de départ en ajustant l'épaisseur ou l'indice de réfraction de la couche sol-gel déposée sur la surface texturée du substrat.

L'application de la couche sol-gel sur au moins une partie d'une épaisseur correspondant à la valeur du paramètre de rugosité Ra ou à la hauteur pic à vallée de la surface texturé du substrat permet de modifier la rugosité et éventuellement la forme des motifs de texturation. Par exemple, lorsque l'on utilise un verre texturé comprenant comme motif de texturation des pyramides, l'application de la couche sol-gel modifiera la forme de ces motifs qui auront alors une forme de pyramide tronquée.

Mais surtout, la partie de la surface texturée du substrat comprenant une couche sol-gel peut définir un motif transparent notamment lorsque la couche sol-gel comble suffisamment la texturation du substrat. L'utilisation de la couche sol-gel selon l'invention permet de rendre le substrat texturé et donc translucide, de nouveau lisse et transparent.

Selon une alternative, la couche sol-gel peut être colorée. Le vitrage ainsi obtenu peut donc comporter des motifs colorés donnant des effets décoratifs uniques.

La couche sol-gel peut être déposée éventuellement au travers d'un masque. Cependant, la solution sol-gel avant réticulation pour former la couche sol-gel n'étant pas acide ou corrosive, elle n'est pas susceptible d'attaquer les matériaux constitutifs du masque. Le masque peut donc être réalisé dans des matériaux moins chers que dans le cas où une attaque acide est réalisée. De plus, les installations pour réaliser cette opération seront moins coûteuses et non problématiques en termes de sécurité et d'environnement.

La couche sol-gel, contrairement aux couches d'émail, ne nécessite pas de traitement thermique à haute température. Les vitrages selon l'invention ne sont pas obligatoirement trempés et peuvent donc être redécoupés aux dimensions souhaitées après réalisation du motif. Le vitrage selon l'invention peut donc subir avant ou après formation du motif les transformations suivantes : découpe, formage, façonnage, trempe, feuilletage double vitrage. L'absence de nécessité de traitement thermique pour former le motif contribue à la flexibilité du choix du substrat de départ.

**EP 2 872 457 B1**

Le demandeur a découvert que les propriétés particulièrement avantageuses en transparence des motifs du vitrage de l'invention sont dues à l'accord d'indice entre le substrat et la couche sol-gel, c'est-à-dire au fait que ces deux éléments ont sensiblement le même indice de réfraction.

L'accord d'indice ou écart d'indice correspond à la valeur absolue de la différence d'indice de réfraction à 589 nm entre les matériaux diélectriques constitutifs du substrat et de la couche sol-gel. Selon l'invention, la variation d'indice de réfraction entre le substrat texturé ou rugueux et le matériau constituant la couche sol-gel doit être de préférence inférieure à 0,020 et mieux inférieure à 0,015. Lorsque la couche sol-gel comble suffisamment la rugosité de la surface texturée du substrat et que l'écart d'indice est faible, on obtient dans ce cas une vision extrêmement nette au travers du vitrage.

Cependant, il n'est pas toujours possible d'obtenir une variation d'indice aussi faible. Par exemple, pour les verres standards, l'indice d'un verre de même type peut varier d'une usine à l'autre entre 1,517 et 1,523. Cette variation de l'ordre de 0,006 est non négligeable devant la gamme d'acceptation d'écart d'indice pour obtenir une excellente transparence.

Le demandeur a découvert que l'utilisation spécifique d'une couche sol-gel particulière permet de préparer facilement des vitrages translucides et transparents par endroit. La couche sol-gel de l'invention présente, en fonction des proportions des différents composés précurseurs la constituant, un indice de réfraction adaptable pouvant notamment varier dans une gamme allant de 1,459 à 1,700, de préférence 1,502 à 1,538.

Grâce à la solution de l'invention, il est donc possible d'adapter avec précision l'indice de réfraction de façon à s'assurer que l'écart d'indice entre le substrat et la couche sol-gel soit inférieur à une valeur définie.

La formulation flexible en terme d'indice de la couche sol-gel de l'invention permet d'obtenir des vitrages transparents par endroit présentant une qualité constante en terme de performance optique, peu importe la provenance du substrat ou la nature du substrat.

Le choix spécifique d'une couche sol-gel permet de :

- s'accorder précisément sur l'indice du substrat alors que ce n'est pas possible avec d'autres types de matériaux tels que les couches d'émail,
- de s'adapter à l'indice précis du verre en fonction de sa provenance,
- d'obtenir une composition ajustable en fonction de la nature du substrat qu'elle soit minérale ou organique,
- de rajouter facilement une composante donnant un aspect coloré à la couche sol-gel,
- d'appliquer la couche sol-gel sur des surfaces de forme complexe et de tailles diverses sans nécessiter d'équipement lourd ;
- d'obtenir des dépôts homogènes en surface, en composition et en épaisseur.

Selon un mode de réalisation, la couche sol-gel présente une épaisseur suffisante pour lisser au moins une partie de la surface texturée du substrat recouvert de ladite couche sol-gel. Dans ce cas, d'autres avantages découlent du procédé de l'invention. D'une part, on abaisse encore davantage les coûts de fabrication et la souplesse de réalisation. Le vitrage comprend alors par endroit des motifs présentant une transparence élevée se traduisant notamment par des valeurs de flou faibles au niveau des surfaces du substrat texturé comprenant la couche sol-gel. L'extrême netteté de la vision au niveau des zones transparente est due à l'accord d'indice le plus ajusté possible.

Une surface lisse est une surface pour laquelle les irrégularités de surface sont telles que le rayonnement n'est pas dévié par ces irrégularités de surface. Le rayonnement incident est alors transmis et réfléchi de manière spéculaire par la surface. La réflexion est dite spéculaire lorsqu'un rayonnement incident sur le vitrage avec un angle d'incidence donné est réfléchi par le vitrage avec un angle de réflexion égal à l'angle d'incidence. De manière analogue, la transmission à travers un vitrage est dite spéculaire lorsqu'un rayonnement incident sur le vitrage avec un angle d'incidence donné est transmis par le vitrage avec un angle de transmission égal à l'angle d'incidence.

De préférence, une surface lisse est une surface pour laquelle les irrégularités aléatoires de surface sont de dimensions inférieures à la longueur d'onde du rayonnement incident sur la surface. De préférence, une surface lisse est une surface présentant soit un paramètre de rugosité correspondant à l'écart moyen arithmétique Ra inférieur à 0,1 $\mu$m, de préférence inférieur à 0,01 $\mu$m, soit des pentes inférieures à 10°.

Un motif transparent selon l'invention correspond donc à une partie de la surface du vitrage à travers laquelle la réflexion et la transmission de rayonnement sont spéculaires. On considère que le motif est transparent au moins dans les domaines de longueurs d'onde utiles pour l'application visée de l'élément. A titre d'exemple, lorsque l'élément est utilisé en tant que vitrage de bâtiment ou de véhicule, il est transparent au moins dans le domaine de longueurs d'onde du visible.

Au sens de l'invention, le terme « indice » fait référence à l'indice optique de réfraction, mesuré à la longueur d'onde de 589 nm.

Selon l'invention, la valeur absolue de la différence d'indice de réfraction à 589 nm entre les matériaux diélectriques constitutifs du substrat et de la couche sol-gel est par ordre de préférence croissant : inférieure ou égale à 0,020,

4

inférieure ou égale à 0,018, inférieure ou égale à 0,015, inférieure ou égale à 0,010, inférieure ou égale à 0,005.

Les substrats transparents dont l'une des surfaces principales est texturée et l'autre éventuellement lisse, peuvent être choisis parmi les substrats en verre minéral ou organique notamment parmi les polymères, les verres, les céramiques ou les vitrocéramiques.

De préférence, la surface texturée du substrat présente :

- un paramètre de rugosité Ra d'au moins 0,5 $\mu$m, mieux d'au moins 1 $\mu$m et notamment compris entre 1 à 5 $\mu$m, de préférence de 1 à 3 $\mu$m,
- un paramètre de rugosité RSm compris entre 10 $\mu$m et 100 $\mu$m, encore plus préférentiellement de 10 à 65 $\mu$m.

La texturation de l'une des surfaces principales des substrats transparents peut être obtenue par tout procédé connu de texturation, par exemple par embossage de la surface du substrat préalablement chauffée à une température à laquelle il est possible de la déformer, en particulier par laminage au moyen d'un rouleau ayant à sa surface une texturation complémentaire de la texturation à former sur le substrat ; par abrasion au moyen de particules ou de surfaces abrasives, en particulier par sablage ; par traitement chimique, notamment traitement à l'acide dans le cas d'un substrat en verre ou en vitrocéramique ; par moulage, notamment moulage par injection dans le cas d'un substrat en polymère thermoplastique ; par gravure.

Lorsque le substrat transparent est en polymère, il peut être rigide ou flexible. Des exemples de polymères convenant selon l'invention comprennent, notamment :

- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluoroesters tels que l'éthylène tétrafluoroéthylène (ETFE), le polyfluorure de vinylidène(PVDF), le polychlorotrifluoréthylène (PCTFE), l'éthylène de chlorotrifluoréthylène (ECTFE), les copolymères éthylène-propylène fluorés (FEP) ;
- les résines photoréticulées et/ou photopolymérisées, telles que les résines thiolène, polyuréthane, uréthane-acrylate, polyester-acrylate et
- les polythiouréthanes.

Ces polymères présentent en général une gamme d'indice de réfraction variant de 1,3 à 1,7.

Parmi les substrats en polymère flexible, on peut citer les intercalaires ou feuillets de matière plastique thermoformable ou sensible à la pression pouvant être de préférence à base de polymères choisis parmi les polybutyrales de vinyle (PVB), les polychlorures de vinyle (PVC), les polyuréthanes (PU), les polyéthylènes téréphtalates (PET) ou les copolymères d'éthylène-acétate de vinyle (EVA).

Par exemple, le substrat peut comprendre une couche à base d'un intercalaire ou feuille en matière plastique thermoformable ou sensible à la pression texturée par compression et/ou chauffage.

De préférence, le substrat est un substrat en verre ou en vitrocéramique. Des exemples de substrats en verre directement utilisables en tant que couche externe de l'élément en couches, comprennent :

- les substrats en verre commercialisés par la société Saint-Gobain Glass dans la gamme SATINOVO®, qui sont déjà texturés et présentent sur l'une de leurs surfaces principales une texture obtenue par sablage ou attaque acide ;
- les substrats en verre commercialisés par la société Saint-Gobain Glass dans la gamme ALBARINO® S, P ou G ou dans la gamme MASTERGLASS®, qui présentent sur l'une de leurs surfaces principales une texture obtenue par laminage ;
- les substrats en verre à haut indice texturés par sablage tels que du verre flint par exemple commercialisés par la société Schott sous les références SF6 (n=1,81), 7SF57 (n=1,85), N-SF66 (n=1,92), P-SF68 (n=2,00).

Les substrats en vitrocéramique peuvent également être des plaques vitrocéramiques destinées, notamment, à couvrir ou recevoir des éléments de chauffage, en particulier destinées à servir de plaque de cuisson. De tels substrats peuvent comprendre une surface principale lisse et une surface principale rugueuse. La surface principale rugueuse est en général connectée aux éléments de chauffage ainsi qu'à des indicateurs de fonctionnement ou afficheurs.

Un substrat en vitrocéramique est à l'origine un verre, dit verre précurseur, dont la composition chimique spécifique permet de provoquer par des traitements thermiques adaptés, dits de céramisation, une cristallisation contrôlée.

L'application d'une couche sol-gel sur la surface texturée d'un substrat en vitrocéramique permet d'obtenir par endroit une surface lisse facilitant l'intégration et la visibilité (vision nette) d'afficheurs éventuels disposés sous le substrat au regard desdites surfaces lisses.

L'épaisseur du substrat est de préférence comprise entre 10 $\mu$m et 19 mm et varie selon le choix du matériau diélectrique.

Les substrats en verre ou en vitrocéramique texturés ont de préférence une épaisseur comprise entre 0,4 et 6 mm, de préférence 0,7 et 19 mm, de préférence 0,7 à 8 mm.

Les substrats en polymère texturés ont de préférence une épaisseur comprise entre 0,020 et 2 mm, de préférence 0,025 et 0,25 mm.

Les substrats à base d'un intercalaire ou feuille en matière plastique ont de préférence une épaisseur comprise entre 10 $\mu$m et 1 mm, de préférence comprise entre 0,3 et 1 mm.

Les substrats peuvent avoir un indice de réfraction compris entre 1,51 et 1,53, par exemple dans le cas de l'utilisation d'un verre standard.

La couche sol-gel comprend de préférence une matrice hybride organique / inorganique à base de silice obtenue selon un procédé sol-gel.

Le procédé sol-gel consiste, dans un premier temps, à préparer une solution dite « solution sol-gel » contenant des précurseurs qui donnent lieu en présence d'eau à des réactions de polymérisation. Lorsque cette solution sol-gel est déposée sur une surface, de par la présence d'eau dans la solution sol-gel ou au contact de l'humidité ambiante, les précurseurs s'hydrolysent et se condensent pour former un réseau emprisonnant le solvant. Ces réactions de polymérisation entraînent la formation d'espèces de plus en plus condensées, qui conduisent à des particules colloïdales formant des sols puis des gels. Le séchage et la densification de ces gels, à une température de l'ordre de quelques centaines de degrés, conduit, en présence de précurseur à base de silice, à une couche sol-gel correspondant à un verre dont les caractéristiques sont semblables à celles d'un verre classique.

Du fait de leur viscosité, les solutions sol-gel, sous forme d'une solution colloïdale ou d'un gel, peuvent être déposées de manière aisée sur la surface texturée du substrat, en se conformant à la texture de cette surface. La couche sol-gel va venir « combler » la rugosité du substrat. En effet, cette couche comprend une surface épousant la rugosité de surface du substrat qui est ainsi texturée et une surface principale externe opposée à cette surface qui est plane. Les couches déposées par un procédé sol-gel assurent donc une planarisation de la surface du substrat selon l'épaisseur de la couche sol-gel.

Selon l'invention, la couche sol-gel comprend une matrice hybride organique/inorganique à base de silice. Cette matrice est obtenue à partir de précurseurs mixtes qui sont des organosilanes $R_nSiX_{(4-n)}$. Ces molécules comportent simultanément des fonctions hydrolysables qui donnent naissance à un réseau ou matrice de silice comprenant des fonctions organiques qui restent fixées sur le squelette de silice.

Selon une variante de l'invention, la couche sol-gel comprend en outre des particules d'au moins un oxyde métallique ou d'au moins un chalcogénure.

Selon une autre variante de l'invention, la matrice hybride organique/inorganique à base de silice comprend en outre au moins un oxyde métallique. Une telle matrice à base de silice comprenant des fonctions organiques et au moins un oxyde métallique peut être obtenue à partir de l'utilisation conjointe d'organosilane et d'au moins un précurseur d'un oxyde métallique. Ces précurseurs forment alors avec l'organosilane une matrice hybride de silice et d'oxyde métallique.

Selon le mode de réalisation préféré de l'invention, la couche sol-gel comprend une matrice hybride organique/inorganique à base de silice et d'au moins un oxyde métallique dans laquelle sont dispersées des particules d'au moins un oxyde métallique ou d'au moins un chalcogénure telle qu'une matrice organique/inorganique de silice et d'oxyde de zirconium dans laquelle sont dispersées des particules de dioxyde de titane.

Les composés principaux de la couche sol-gel de l'invention sont constitués des composés formant la matrice et des particules dispersées dans ladite matrice. Les composés principaux de la couche sol-gel peuvent donc être :

- la silice comprenant des fonctions organiques de la matrice,
- le ou les oxydes métalliques de la matrice,
- les particules d'oxydes métalliques et/ou de chalcogénures dispersées dans la matrice.

Pour adapter avec précision l'indice de réfraction de la couche sol-gel, on modifie les proportions d'oxydes métalliques provenant de la matrice ou dispersées sous forme de particules. En règle générale, les oxydes métalliques ont un indice de réfraction plus élevé que celui de la silice. En augmentant les proportions d'oxyde métallique, on augmente l'indice de réfraction de la couche sol-gel. L'indice de réfraction de la couche sol-gel augmente de manière linéaire en fonction de la fraction volumique d'un type d'oxyde métallique pour des proportions en volume dudit oxyde métallique inférieures à une valeur seuil. Par exemple, lorsque l'on ajoute des particules de $TiO_2$, on observe une

variation linéaire de l'indice de réfraction de la couche sol-gel pour des proportions en volume de $TiO_2$ par rapport au volume total des composés principaux de la couche sol-gel inférieures à 20%.

Il est donc possible de déterminer théoriquement l'indice de réfraction d'une couche sol-gel en fonction des composés principaux la constituant et ainsi de déterminer théoriquement la formulation d'une solution sol-gel qui permettra d'obtenir après durcissement une couche sol-gel présentant l'indice de réfraction requis.

La solution de l'invention est donc particulièrement avantageuse. Par exemple, à réception de substrats de verre destinés à être utilisés comme couche externe inférieure, on mesure leur indice de réfraction. Puis, on formule une solution sol-gel qui donnera après durcissement une couche sol-gel présentant un accord d'indice de réfraction avec ledit substrat inférieur à 0,020, de préférence 0,015.

Les couches sol-gel peuvent avoir un indice de réfraction variant dans une large gamme d'indice notamment 1,459 à 1,700, de préférence 1,502 à 1,538 et mieux de 1,517 et 1,523.

Les composés principaux de la couche sol-gel représentent en masse par rapport à la masse totale de la couche sol-gel, par ordre de préférence croissant au moins 80%, au moins 90%, au moins 95%, au moins 99%, 100%.

La couche sol-gel comprend de préférence en masse par rapport à la masse totale des composés principaux constituant la couche sol-gel :

- 50 à 100%, de préférence 70 à 95% et mieux 85 à 90% de silice comprenant des fonctions organiques de la matrice, et/ou
- 0 à 10%, de préférence 1 à 5% et mieux 2 à 4% d'oxyde métallique de la matrice, et/ou
- 0 à 40%, de préférence 1 à 20%, et mieux 5 à 15% de particules d'oxydes métalliques et/ou de chalcogénures dispersées dans la matrice.

Les proportions volumiques des particules d'oxydes métalliques sur le volume total des composés principaux de la couche sol-gel est par ordre de préférence croissant compris entre 0 et 25%, entre 1 et 15%, entre 2 et 8%.

La couche sol-gel est obtenue par durcissement d'une solution sol-gel et comprend le produit résultant de l'hydrolyse et de la condensation d'au moins un organosilane de formule générale $R_nSiX_{(4-n)}$ dans laquelle :

- n égal à 1, 2, 3, de préférence n égal 1 ou 2 et mieux n égal 1,
- les groupes X, identiques ou différents, représentent des groupes hydrolysables choisis parmi les groupe alcoxy, acyloxy ou halogénure, de préférence alcoxy, et
- les groupes R, identiques ou différents, représentent des groupes organiques (ou fonctions organiques) non hydrolysables liés au silicium par un atome de carbone.

De préférence, la couche sol-gel est obtenue par durcissement d'une solution sol-gel et comprend le produit résultant de l'hydrolyse et de la condensation de :

i) au moins un organosilane et
ii) au moins un précurseur d'un oxyde métallique et/ ou
iii) des particules d'au moins un oxyde métallique ou d'au moins un chalcogénure.

Les particules d'oxyde métallique et/ou les précurseurs des oxydes métalliques comprennent un métal choisi parmi le titane, le zirconium, le zinc, le niobium, l'aluminium et le molybdène.

Le ou les organosilanes comprennent 2 ou 3, en particulier 3, groupes hydrolysables X, et un ou deux, en particulier un, groupe non hydrolysable R.

Les groupes X sont préférentiellement choisis parmi les groupes alcoxy -O-R', en particulier alcoxy en C1-C4, acyloxy -O-C(O)R' où R' est un radical alkyle, préférentiellement en C1-C6, de préférence méthyle ou éthyle, halogénure tels que Cl, Br et I, et les combinaisons de ces groupes. De préférence, les groupes X sont des groupes alcoxy, et en particulier méthoxy ou éthoxy.

Le groupe R est un groupe hydrocarboné non hydrolysable. Un certain nombre de groupes conviennent selon l'invention. La présence et la nature de ces groupes permet d'obtenir des couches sol-gel présentant des épaisseurs compatibles avec les applications de l'invention. De préférence, le groupe R correspondant à la fonction organique non hydrolysable présente une masse molaire d'au moins 50 g/mol, de préférence d'au moins 100 g/mol. Ce groupe R est donc un groupe non éliminable, même suite à l'étape de séchage de la couche sol-gel et peut être choisi parmi :

- les groupes alkyle, de préférence les groupes alkyle linéaires ou ramifiés en C1 à C10, de préférence encore en C3 à C10, tels que par exemple les groupes méthyle, éthyle, propyle, n- butyle, i-butyle, sec-butyle et tertiobutyle ;
- les groupes alcényle, de préférence les groupes alcényle en C2 à C10, tels que par exemple les groupes vinyle, 1-propényle, 2-propényle et butényle ;

- les groupes alcinyles tels que par exemple les groupes acétylényle et propargyle ;
- les groupes aryle, de préférence les groupes aryle en C6 à C10, tels que les groupes phényle et naphtyle ;
- les groupes alkyl-aryle ;
- les groupes aryl-alkyle ;
- les groupes (méth)acryle et (méth)acryloxy-propyle ;
- les groupes glycidyle et glycidyloxy.

Les groupes définis ci-dessus tels que les groupes alkyle, alcényle, alcynyle, alkylaryle, arylalkyle, peuvent comprendre en outre au moins un groupe choisi parmi les groupes amine primaire, secondaire ou tertiaire (le radical non hydrolysable est alors par exemple un groupe aminoaryle ou aminoalkyle), amide, alkylcarbonyle, anilino substitué ou non substitué, aldéhyde, cétone, carboxyle, anhydride, hydroxyle, alcoxy, alcoxycarbonyle, mercapto, cyano, hydroxyphényle, alkyl carboxylate, acide sulfonique, acide phosphorique, meth(acryloxyloxy), les groupes comprenant un cycle époxyde tels que glycidyle et glycidiloxy, allyle, vinyle.

Les organosilanes particulièrement préférés comprennent des groupes X identiques ou différents les uns des autres, de préférence identiques, et représentent un groupe hydrolysable, de préférence un groupe alcoxy en C1 à C4, de préférence encore un groupe éthoxy ou méthoxy ; et R est un groupe non hydrolysable, de préférence un groupe glycidyle ou glycidyloxy-alkylène en C1 à C20, de préférence en C1 à C6, par exemple un groupe glycidyloxypropyle, un groupe glycidyloxyéthyle, un groupe glycidyloxybutyle, un groupe glycidyloxypentyle, un groupe glycidyloxyhexyle et un groupe 2-(3,4-epoxycyclohexyl)éthyle.

Avantageusement, le composé organosilane est choisi parmi les composés suivants : allyltriméthoxysilane, N-(2-aminoéthyl)-3-aminopropyltriméthoxysilane, N-[N'-(2'-aminoéthyl)-2-aminoéthyl]-3-aminopropyl-triméthoxysilane, 3-aminopropyltriméthoxysilane, 3-glycidoxypropyltriméthoxysilane (GLYMO), 3-mercaptopropyltriméthoxysilane, 3-méthacryloxypropylméthyldiméthoxysilane, 3-méthacryloxypropyltriméthoxysilane, N-phénylaminopropyltriméthoxysilane, vinyltriméthoxysilane, 3-aminopropyltriéthoxysilane, p-aminophénylsilane, 3-aminopropyltriéthoxysilane, 3-glycidoxypropyldiisopropyléthoxysilane, 3-glycidoxypropyltriéthoxysilane, (3-glycidoxypropyl) méthyldiéthoxysilane, 3-mercaptopropyltriéthoxysilane, 3-méthacryloxypropylméthyldiéthoxysilane, vinylméthyldiéthoxysilane, vinyltriéthoxysilane, N-[(3-(triéthoxysilyl)-propyl]-4,5-dihydroximidazole.

Parmi les composés énumérés ci-dessus, le composé préféré est le GLYMO.

Les particules d'oxyde métallique et/ou de chalcogénure dispersées dans la matrice hybride organique/inorganique à base de silice sont de préférence choisis dans le groupe suivant : $TiO_2$, $ZrO_2$, $ZnO$, $NbO$, $SnO_2$, $Al_2O_3$, $MoO_3$, $ZnS$, $ZnTe$, $CdS$, $CdSe$, $IrO_2$, $WO_3$, $Fe2O3$, $FeTiO_3$, $BaTi_4O_9$, $SrTiO_3$, $ZrTiO_4$, $Co_3O_4$, oxyde ternaire à base de bismuth, $MoS_2$, $RuO_2$, $Sb_2O_4$, $Sb_2O_5$, $BaTi_4O_9$, $MgO$, $CaTiO_3$, $V_2O_5$, $Mn_2O_3$, $CeO_2$, $RuS_2$, $Y_2O_3$, $La_2O_3$.

De préférence, les particules sont des particules d'oxyde métallique comprenant un métal choisi parmi le titane, le zirconium, le zinc, le niobium, l'aluminium et le molybdène.

Selon un mode de réalisation particulièrement avantageux, l'oxyde métallique est un oxyde de titane ($TiO_2$), sous forme rutile ou anatase ou un oxyde de zirconium ($ZrO_2$).

Les particules d'au moins un oxyde métallique ou d'au moins un chalcogénure ont, par ordre de préférence croissant, un diamètre moyen inférieur ou égal à 1 $\mu$m, inférieur ou égal à 60 nm, inférieur ou égal à 50 nm, inférieur ou égal à 20 nm. Les particules ont en général un diamètre supérieur à 1 nm et même supérieur à 5 nm.

L'indice de réfraction des oxydes métalliques des chalcogénure est par ordre de préférence croissant, supérieur à 1,49, supérieur à 1,5, supérieur à 1,6, supérieur à 1,7, supérieur à 1,8, supérieur 1,9, supérieur à 2, supérieur à 2,1, supérieur à 2,2.

A titre de produit commercial utilisable, on peut citer le produit commercialisé sous la dénomination Optolake 1120Z® (11RU7-A-8) par la société Catalyst & Chemical (CCIC) correspondant à un colloïde de $TiO_2$. On peut citer également le produit commercialisé par la société Cristal Global sous la référence S5-300A correspondant à une dispersion aqueuse stable de particules de $TiO_2$ à 23% en masse par rapport à la masse totale de la dispersion, présentant une surface spécifique BET d'environ 330 $m^2/g$ et un diamètre moyen de l'ordre de 50 nm.

Les précurseurs des oxydes métalliques peuvent être choisis parmi les composés métallo-organiques tels que les alcoxydes métalliques, les sels métalliques, lesquels comprennent les éléments métalliques.

Les précurseurs des oxydes métalliques peuvent comprendre un métal choisi parmi le titane, le zirconium, le zinc, le niobium, l'aluminium et le molybdène. De préférence, la solution sol-gel comprend au moins un précurseur d'oxyde de zirconium, d'aluminium, ou de titane, de préférence un alcoxyde métallique ou un halogénure métallique. Des exemples de composés précurseurs sont les suivants :

- $Al(OCH_3)_3$, $Al(OC_2H_5)_3$, $Al(OC_3H_7)_3$, $Al(OC_4H_9)_3$, $Al(OC_2H_4OC_4H_9)_3$, $AlCl_3$, $AlCl(OH)_2$,
- $TiCl_4$, $Ti(OC_2H_5)_4$, $Ti(OC_3H_7)_4$, $Ti(OC_4H_9)_4$, $Ti(2\text{-éthylhexoxy})_4$,
- $ZrCl_4$, $Zr(OC_2H_5)_4$, $Zr(OC_3H_7)_4$, $ZrOCl_2$, $Zr(2\text{-éthylhexoxy})_4$.

De manière préférée, la solution sol-gel selon l'invention comprend un seul composé précurseur choisi parmi les alcoxydes de zirconium, tels que le tétrapropoxide de zirconium (TPOZ).

Les organosilanes (i), les précurseurs d'oxydes métalliques (ii) et les oxydes métalliques et chalcogénure (iii) sont les composés principaux de la solution sol-gel. La solution sol-gel comprend outre ces produits dits principaux, des additifs et des solvants. Les additifs représentent de préférence moins de 10%, de préférence moins de 5% en masse par rapport à la masse totale de la solution sol-gel.

Les proportions d'organosilanes, en masse par rapport à la masse totale des composants principaux de la solution sol-gel sont comprises, par ordre de préférence croissant, entre 50 et 99%, entre 60% et 98%, entre 70 et 95%, entre 80 et 90%.

Les proportions des précurseurs d'oxydes métalliques, en masse par rapport à la masse totale des composants principaux de la solution sol-gel sont comprises, par ordre de préférence croissant, entre 0 et 10%, entre 1 et 10%, entre 2 et 8%, entre 4 et 7%.

Les proportions des oxydes métalliques et de chalcogénures, en masse par rapport à la masse totale des composants principaux de la solution sol-gel sont comprises, par ordre de préférence croissant, entre 0 et 40%, entre 1 et 20%, entre 2 et 10%, entre 4 et 9%.

La solution sol-gel peut comprendre en plus des composés principaux, au moins un solvant et éventuellement au moins un additif.

Les solvants sont choisis parmi l'eau et les solvants organiques. La solution sol-gel comporte de préférence de l'eau pour permettre les réactions d'hydrolyse et de condensation. La solution sol-gel peut comprendre, en outre, au moins un solvant organique dont le point d'ébullition, à pression atmosphérique, est de préférence compris entre 70 et 140°C. Comme solvant organique utilisable selon l'invention, on peut citer les alcools, les esters, les cétones, le tétrahydropyrane, et leurs mélanges. Les alcools sont de préférence choisis parmi les alcools en C1-C6, tels que le méthanol. Les esters sont de préférence choisis parmi les acétates, et on peut citer en particulier l'acétate d'éthyle. Parmi les cétones, on utilisera de préférence la méthyléthylcétone.

Parmi les solvants appropriés, on peut donc citer l'eau, le méthanol, l'éthanol, le propanol (le n-propanol et l'isopropanol), le butanol, le 1-méthoxy-2-propanol, le 4-hydroxy-4-méthyl-2-pentanone, le 2-méthyl-2-butanol, le butoxyéthanol et les mélange eau/solvants organiques.

Les proportions de solvant peuvent varier dans une large gamme. Elles dépendront notamment des épaisseurs à obtenir. En effet, plus la solution sol-gel présente un contenu solide élevé, plus il est possible de déposer des épaisseurs importantes et donc d'obtenir des couches sol-gel d'épaisseurs élevées.

Les proportions en masse de solvant par rapport à la masse totale de la solution sol-gel peuvent représenter par exemple au moins 10% et au plus 80%.

De même, les proportions en masse des composés principaux par rapport à la masse totale de la solution sol-gel représentent, par exemple au moins 20% et au plus 90%.

Les proportions en masse d'eau par rapport à la masse totale de la solution sol-gel représentent, par exemple, entre 10 et 40%, entre 10 et 30% ou entre 15 à 25%.

Lorsque la solution sol-gel comprend en outre un ou plusieurs solvants organiques, les proportions en masse de solvant organique par rapport à la masse totale de la solution sol-gel représentent, par exemple, entre 10 et 40%, entre 10 et 30% ou entre 15 à 25%.

La composition peut comprendre en outre divers additifs tels que des agents tensioactifs, des absorbeurs UV, des pigments ou colorants, des catalyseurs d'hydrolyse et/ou de condensation, des catalyseurs de durcissement. Les proportions totales des additifs représentent de préférence moins de 5% en masse par rapport à la masse totale de la solution sol-gel.

Les agents tensioactifs améliorent les propriétés de mouillage et favorisent un meilleur étalement de la composition sur la surface à revêtir. Parmi ces tensioactifs, on peut citer les tensioactifs non-ioniques tels que les alcools gras éthoxylés ou neutres par exemple les tensioactifs fluorés. On peut notamment citer à titre de tensioactif fluoré, le produit commercialisé par 3M sous la référence FC-4430.

Les proportions d'agents tensioactifs en masse par rapport à la masse totale de la solution sol-gel représentent, par ordre de préférence croissant, 0,01 à 5%, 0,05 à 3%, à 0,1 à 2%.

Les catalyseurs d'hydrolyse et/ou de condensation sont de préférences choisis parmi les acides ou les bases.

Les catalyseurs acides peuvent être choisis parmi les acides organiques, les acides minéraux, et leurs mélanges. Les acides organiques peuvent notamment être choisis parmi les acides carboxyliques tels que les acides monocarboxyliques aliphatiques comme l'acide acétique, les acides polycarboxyliques comme les acides dicarboxyliques et les acides tricarboxyliques par exemple l'acide citrique, et leurs mélanges. Parmi les acides minéraux, on peut utiliser l'acide nitrique, ou l'acide chlorhydrique et leurs mélanges.

L'acide acétique présente pour avantage supplémentaire, lorsque la composition comprend un précurseur d'oxyde métallique, d'assurer la fonction de stabilisant. En effet, l'acide acétique vient chélater ces précurseurs et prévient ainsi une hydrolyse trop rapide de ce type de produit.

Les catalyseurs basiques peuvent être choisis parmi les bases aminées telles que l'éthanolamine, la triéthylamine et leurs mélanges. On utilise une base en particulier dans le cas où les acides seraient à proscrire du fait de la nature du substrat ou du silane mis en oeuvre.

La solution peut comprendre en outre des pigments, colorants ou nacres. Selon ce mode de réalisation, les couches sol-gel peuvent présenter un aspect coloré. Une autre alternative pour obtenir cet aspect coloré consiste à choisir d'introduire dans la matrice de particules colloïdales des oxydes métalliques colorés tels que des particules d'oxyde de cobalt, de vanadium, de chrome, de manganèse, de fer, de nickel, de cuivre et de tous autres métaux de transition et de non métaux susceptibles de conférer ledit aspect coloré.

Le dépôt peut se faire selon l'une des techniques suivantes :

- le trempage-retrait (connu sous la terminologie anglaise « dip-coating ») ;
- l'enduction centrifuge (connue sous la terminologie anglaise « spin-coating »);
- l'enduction laminaire (connue sous la terminologie anglaise « laminar-flow-coating ou meniscus coating ») ;
- la pulvérisation (connue sous la terminologie anglaise « spray-coating ») ;
- l'épandage (connu sous la terminologie anglaise « soak-coating ») ;
- l'enduction au rouleau (connue sous la terminologie « roll-process ») ;
- l'enduction au pinceau (connue sous la terminologie anglaise « paint-coating ») ;
- la sérigraphie (connue sous la terminologie anglaise « screen-printing »),
- le slot-coating ou
- le jet d'encre.

Le dépôt est de préférence effectué par pulvérisation avec atomisation pneumatique, sérigraphie ou jet d'encre car ces techniques permettent avantageusement de dessiner des motifs sans masquage particulier.

La couche sol-gel vient combler au moins une partie de la rugosité du substrat. Lorsque l'on souhaite obtenir des motifs transparents, l'épaisseur de la couche sol-gel doit être suffisante pour venir planariser la surface du substrat.

Une bonne transparence est obtenue lorsque l'épaisseur de la couche sol-gel est :

- supérieure à la valeur du paramètre de rugosité Ra de la surface texturée du substrat ou
- environ égale, de préférence supérieure ou égale à la hauteur pic à vallée de la surface texturée du substrat.

Le choix de l'épaisseur de couche sol-gel sera fonction de l'effet recherché. La couche sol gel peut donc présenter une épaisseur correspondant à :

- au moins 10%, 20%, 30%, 40%, 50%, 60%, 70%, 80%, 90% ou 100% de la hauteur pic à vallée, et/ou
- au plus 100%, 90%, 80%, 70%, 60%, 50%, 40% de la hauteur pic à vallée.

De préférence, la surface texturée du substrat revêtue de la couche sol-gel présente :

- une hauteur pic à vallée inférieure à 10 $\mu$m, mieux inférieure à 5 $\mu$m et encore mieux inférieure à 1 $\mu$m,
- un paramètre de rugosité Ra inférieur à 1 $\mu$m, mieux inférieur à 0,5 $\mu$m et mieux inférieur à 0,1 $\mu$m et notamment compris entre 0,01 à 1 $\mu$m.

L'épaisseur de la couche sol-gel peut par exemple être comprise entre 5 nm et 100 $\mu$m, de préférence entre 50 nm et 50 $\mu$m. Cette épaisseur peut être obtenue en une seule couche, par une seule ou plusieurs opération d'application (ou passe), par des techniques telles que le trempage, l'aspersion ou la pulvérisation.

La température de séchage du film sol-gel, peut varier de 0 à 200°C, de préférence de 100°C à 150°C, de préférence encore de 120 à 170°C.

De manière avantageuse, le vitrage de l'invention comprend sur la partie de la surface texturée du substrat comprenant une couche sol-gel :

- un flou en transmission mesuré selon la norme ASTM D 1003 inférieur à 5%, de préférence inférieur à 2,5 et mieux inférieur à 1%,
- une clarté mesurée au Haze-Gard plus de BYK supérieure à 93%, de préférence supérieur à 95% et mieux supérieure à 97%.

Le choix des propriétés de réflexion et de transmission intrinsèque du substrat ou de la couche sol-gel est fonction des attentes entre une bonne transparence du vitrage et l'obtention d'autres propriétés telles que de la couleur.

De manière avantageuse, le vitrage de l'invention comprend sur la partie de la surface texturée du substrat ne comprenant pas une couche sol-gel un flou en transmission supérieur à 15 et/ou une clarté inférieure à 90%.

La texture ou rugosité de la surface texturée du substrat est formée par une pluralité de motifs en creux ou en saillie par rapport à un plan général. De préférence, la hauteur moyenne des motifs est comprise entre 1 micromètre et 100 $\mu$m. Au sens de l'invention, la hauteur moyenne des motifs de la surface texturée (correspondant à Ra) est définie comme la moyenne arithmétique des distances $y_i$ en valeur absolue prises entre le sommet et le plan général de la surface pour chaque motif de la surface de contact, égale à $\dfrac{1}{n}\displaystyle\sum_{i=1}^{n}\left|y_i\right|$.

Les motifs de la texture de la surface du substrat peuvent être répartis de manière aléatoire sur la surface principale texturée du substrat. En variante, les motifs de la texture de la surface texturée du substrat, peuvent être répartis de manière périodique sur la surface de contact. Ces motifs peuvent être, notamment, des cônes, des pyramides, des rainures, des nervures, des vaguelettes.

De manière avantageuse, les surfaces principales externes lisses du substrat recouvert de la couche sol-gel sont planes ou bombées, de préférence, ces surfaces principales sont parallèles entre elles. Cela contribue à limiter la dispersion lumineuse pour un rayonnement traversant l'élément en couches, et donc à améliorer la netteté de la vision à travers l'élément en couches.

Dans un mode de réalisation de l'invention, le substrat est un substrat en verre, en vitrocéramique ou en polymère et la couche de sol-gel est déposée sur la surface principale texturée du substrat.

Les motifs peuvent avoir toute forme et être plus au moins grands. Les motifs peuvent correspondre à une partie de la surface du vitrage représentant quelques cm$^2$ à plusieurs m$^2$.

Enfin, l'invention a pour objet l'utilisation du vitrage tel que décrit précédemment comme tout ou partie d'un vitrage pour véhicule, bâtiment, mobilier urbain, ameublement intérieur.

Les caractéristiques et avantages de l'invention apparaîtront dans la description qui va suivre de plusieurs modes de réalisation d'un élément en couches, donnée uniquement à titre d'exemple et faite en se référant aux dessins annexés dans lesquels :

- les figures 1 et 2 sont des coupes transversales schématiques d'un vitrage selon l'invention ;
- la figure 3 représente l'évolution de l'indice de réfraction en fonction des proportions en volume de $TiO_2$ dans une couche sol-gel,
- la figure 4 représente des clichés pris au microscope électronique à balayage de substrats satinés de verre rugueux transparent Satinovo® sur lequel une couche sol-gel a été déposée par procédé sol gel,
- les figures 5 et 6 sont des graphiques montrant l'évolution du flou (axe des ordonnées situé à droite) et de la clarté (axe des ordonnées situé à gauche) en fonction de l'indice de réfraction de la couche sol-gel et de la variation d'indice de réfraction entre un substrat Satinovo® et la couche sol-gel.

Pour la clarté du dessin, les épaisseurs relatives des différentes couches sur les figures n'ont pas été rigoureusement respectées.

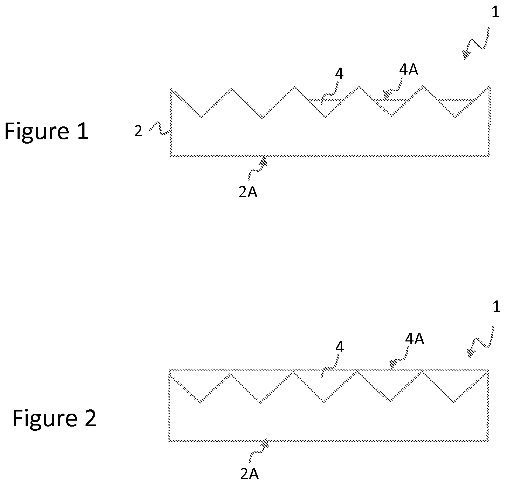

Le vitrage 1 illustré sur la figure 1 comprend un substrat 2 et une couche sol-gel 4, qui sont constitués en des matériaux diélectriques transparents ayant sensiblement le même indice de réfraction n2, n4. Chacun de ces éléments présente une surface principale lisse, respectivement 2A ou 4A. La surface texturée du substrat est formée par une pluralité de motifs en creux ou en saillie par rapport à un plan général de la surface.

Le vitrage 1 illustré sur la figure 2 comprend une couche sol-gel 4 venant lisser la rugosité du substrat 2. Les surfaces externes lisses 2A et 4A du vitrage 1 permettent une transmission spéculaire de rayonnement, c'est-à-dire l'entrée d'un rayonnement ou la sortie d'un rayonnement sans modification de la direction du rayonnement.

Un exemple de procédé de fabrication du vitrage de l'invention est décrit ci-après. Le procédé de fabrication d'un vitrage selon l'invention peut comprendre les étapes selon lesquelles :

- on mesure l'indice de réfraction du substrat, et
- on choisit une solution sol-gel qui donnera après réticulation une couche sol-gel dont la valeur absolue de la différence d'indice de réfraction à 589 nm entre les matériaux diélectriques constitutifs du substrat et de la couche sol-gel est inférieure ou égale à 0,020, de préférence inférieure ou égale 0,015.

Un substrat en verre texturé de type SATINOVO®, ALBARINO® ou MASTERGLASS® ou un substrat à base de matériau polymère, rigide ou flexible, par exemple de type polyméthacrylate de méthyle ou polycarbonate peut être utilisé. La couche sol-gel est ensuite déposée sur la surface texturée du substrat. Cette couche vient, à l'état visqueux, liquide ou pâteux, épouser la texture de la surface du substrat.

Le vitrage selon l'invention est, susceptible d'être utilisé pour toutes applications connues de vitrages, telles que pour véhicules, bâtiments, mobilier urbain, ameublement intérieur, éclairage etc. Le vitrage de l'invention est tout particulièrement utile comme portes, cloisons de murs intérieures, écrans de douche en verre, balcons, meubles, étagères en verre, accessoires de cuisine et plans de travail, etc.

**Exemples**

**I. Préparation de solutions sol-gel et de couches sol-gel comprenant un indice de réfraction ajustable**

Les couches sol-gel préparées dans les exemples comprennent une matrice hybride organique/inorganique de silice et d'oxyde de zirconium dans laquelle sont dispersées des particules de dioxyde de titane. Les composés principaux utilisés dans les solutions sol-gel sont :

- le 3-glycidoxypropyltriméthoxysilane (GLYMO),
- le propoxyde de zirconium sous forme de solution à 70% en masse dans du propanol,
- le $TiO_2$, commercialisé sous le nom Cristal Activ[tm], sous forme de particules de diamètre inférieur à 50 nm dans une dispersion aqueuse présentant un contenu solide de 23% en masse.

Une première composition précurseur de la matrice est préparée en mélangeant l'organosilane, la solution de propoxyde de zirconium, de l'acide acétique et éventuellement de l'eau. Les constituants sont mélangés goutte à goutte sous agitation forte. Les autres composés sont ensuite ajoutés dans cette première composition, c'est-à-dire la dispersion aqueuse de dioxyde de titane sous forme de particules, le surfactant et éventuellement d'autres solvants de dilution tels que l'éthanol. On obtient ainsi la solution sol-gel.

En fonction des proportions de dispersion de dioxyde de titane ajoutées à la solution sol-gel, la matrice de la couche sol-gel une fois réticulée sera plus ou moins chargée en particule de $TiO_2$. L'indice de réfraction de la couche sol-gel dépend de la fraction volumique de dioxyde de titane. Il est ainsi possible de faire varier l'indice de réfraction de la couche sol-gel résultante entre 1,49 et 1,67 avec un ajustement de haute précision de l'ordre de 0,001. Cela permet d'obtenir pour tous types de substrats en verre standards utilisés comme couche externe inférieure, un accord d'indice inférieur à 0,015.

Le contenu solide de la couche sol-gel influence l'épaisseur maximum qu'il est possible de déposer en une passe.

Afin d'illustrer ces résultats, différentes solutions sol-gel ont été préparées. Ces solutions ont ensuite été appliquées par pulvérisation sur un support et réticulées pendant une durée de 20 minutes à quelques heures à une température de 150°C ou de 200°C de façon à former des couches sol-gel présentant des indices de réfraction variant entre 1,493 à 1,670.

**II. Influence des proportions volumiques de $TiO_2$ sur l'indice de réfraction de la couche sol-gel**

Les tableaux ci-dessous récapitulent les compositions des solutions sol-gel testées ainsi que les compositions des couches sol-gel résultantes. Concernant la solution sol-gel, les proportions données correspondent aux proportions en masse par rapport à la masse totale de la solution sol-gel.

| Solution sol-gel | A | B | C | D | E | F | G | H | I |
|---|---|---|---|---|---|---|---|---|---|
| **Composés principaux :** | | | | | | | | | |
| GLYMO | 68,1 | 64,2 | 55,6 | 52,5 | 22,5 | 20,3 | 18,3 | 16,6 | 14,8 |
| Propoxyde de zirconium | 4,8 | 4,5 | 3,9 | 3,7 | 1,6 | 1,4 | 1,3 | 1,2 | 1,0 |
| $TiO_2$ | 0,0 | 2,8 | 4,2 | 6,5 | 3,5 | 5,1 | 6,6 | 7,8 | 9,1 |
| **Additifs** | | | | | | | | | |
| Acide acétique | 4,3 | 4,0 | 3,5 | 3,3 | 1,4 | 1,3 | 1,1 | 1,0 | 0,9 |
| 3M-FC 4430 | 0,0 | 0,1 | 0,2 | 0,3 | 0,2 | 0,2 | 0,3 | 0,3 | 0,4 |
| **Solvants** | | | | | | | | | |
| Propanol | 2,0 | 1,9 | 1,7 | 1,6 | 0,7 | 0,6 | 0,5 | 0,5 | 0,4 |
| Eau | 12,8 | 21,6 | 24,4 | 31,6 | 16,0 | 20,9 | 25,5 | 29,2 | 33,3 |
| Ethanol | 0,0 | 12,4 | 18,2 | 28,2 | 15,3 | 22,2 | 28,6 | 33,9 | 39,6 |
| **Total** | 100 | 100 | 100 | 100 | 100 | 100 | 100 | 100 | 100 |

Concernant la couche sol-gel, les proportions en volume de $TiO_2$ sont définies par rapport au volume total des composants principaux comprenant la matrice hybride de silice et d'oxyde de zirconium et les particules de $TiO_2$ Les proportions des composants principaux correspondent aux proportions en masse des composés principaux de la couche sol-gel par rapport à la masse totale de composés principaux.

| Couche sol-gel | A | B | C | D | E | F | G | H | I |
|---|---|---|---|---|---|---|---|---|---|
| Composés principaux* :<br>Gly-SiO2<br>ZrO2<br>$TiO_2$ | 96<br>4<br>0 | 91<br>3<br>6 | 87<br>3<br>9 | 82<br>3<br>14 | 79<br>3<br>18 | 72<br>3<br>26 | 65<br>2<br>33 | 59<br>2<br>39 | 53<br>2<br>46 |
| % en volume de TiO2 | 0 | 3 | 5 | 8 | 9,8 | 15 | 20,1 | 24,7 | 30 |
| Indice mesuré | 1,493 | 1,517 | 1,529 | 1,557 | 1,567 | 1,600 | 1,623 | 1,651 | 1,674 |
| Indice Théorique | 1,493 | 1,515 | 1,528 | 1,549 | 1,564 | 1,599 | - | - | - |

Suite à la réticulation de l'organosilane et du propoxyde de zirconium par réaction d'hydrolyse et de condensation, on obtient dans la couche sol-gel une matrice à base d'oxyde de silicium comprenant un groupement organique non hydrolysable appelé ci-après « $Gly-SiO_2$ » et d'oxyde de zirconium dans laquelle sont dispersées les particules de $TiO_2$. Ces trois composés représentent les composés principaux de la couche sol-gel.

La fraction volumique de dioxyde de titane influence linéairement l'indice de réfraction de la couche sol-gel pour des proportions volumique en $TiO_2$ inférieure à 20%. Pour des proportions supérieures, l'indice de réfraction continue à augmenter mais on observe un fléchissement de la pente de la courbe. Toutefois, une fois cette courbe déterminée, l'homme du métier est en mesure d'estimer, par approximation, l'indice de réfraction d'une couche sol-gel comprenant une fraction volumique de $TiO_2$ supérieure à 20%.

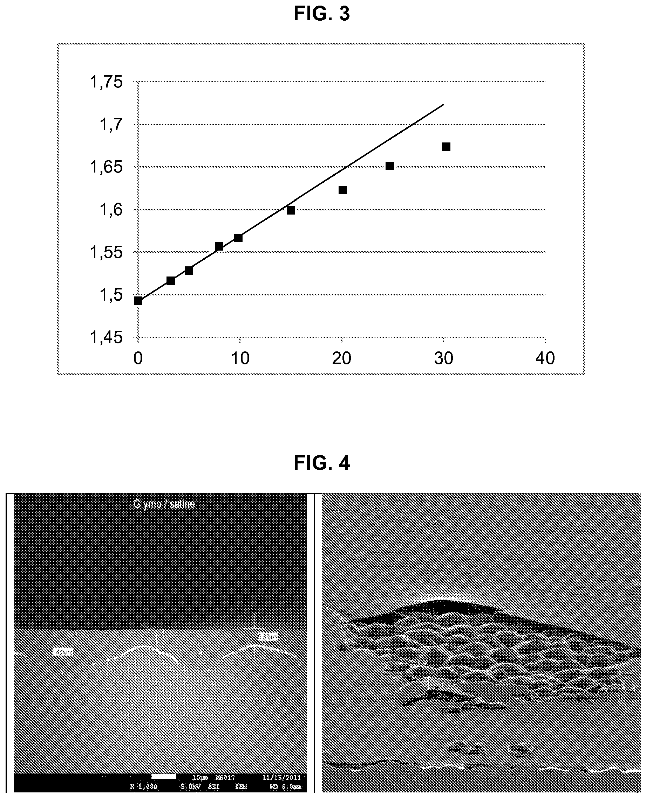

La figure 3 représente l'évolution de l'indice de réfraction en fonction des proportions en volume de $TiO_2$ dans la couche sol-gel. On observe l'évolution linéaire de l'indice de réfraction en fonction des proportions de $TiO_2$ pour des proportions inférieures à 20%.

La précision sur l'indice de réfraction est de $7\times10^{-4}$ pour une erreur de 0,1% en volume sur la quantité de $TiO_2$.

### III. Observation MEB

Des observations par microscopie électronique à balayage ont été effectuées pour s'assurer que les couches sol-gel permettent de combler en épaisseur la rugosité du substrat et d'obtenir une surface supérieure plane. Les images de la figure 4 représentent des substrats satinés de verre rugueux transparent Satinovo® de la société Saint-Gobain sur lequel une couche sol-gel O a été déposée par procédé sol gel. Le vitrage de l'invention correspond à un verre rugueux par endroit, présentant des zones transparentes et translucides.

Ces substrats de 4 mm d'épaisseur comprennent une surface principale texturée obtenue par attaques acides. La hauteur moyenne des motifs de la texturation du substrat correspondant à la rugosité Ra de la surface texturée du verre Satinovo®, est comprise entre 1 et 5 $\mu$m. Son indice de réfraction est de 1,518 et sa hauteur pic à vallée (PV) est comprise entre 12 et 17 $\mu$m.

Sur l'image de gauche représentant une vue en coupe du substrat Satinovo® recouvert de la couche sol-gel, on voit clairement que la texture est formée par une pluralité de motifs en creux ou en saillie par rapport au plan général de la surface de contact. L'épaisseur de la couche sol-gel est de 14,3 $\mu$m.

L'image de droite représente une vue prise de dessus d'un même substrat. La couche sol-gel n'est pas appliquée sur toute la surface du substrat Satinovo®. La couche sol-gel permet de planariser la rugosité du substrat.

Ce substrat Satinovo® revêtu d'une couche sol-gel présente une transmission lumineuse TL de 90,1 %, un flou de 1,88 % et une clarté de 92,5%.

### IV. Evaluation de l'influence de l'accord d'indice

Afin de mesurer l'influence de l'accord d'indice entre la couche sol gel et le substrat, différentes solutions sol-gel ont été préparées et déposées sur des substrats satinés de verre rugueux transparent Satinovo® définis ci-dessus. Les épaisseurs des couches sol-gel déposées après séchage sont d'environ 15 $\mu$m.

Cet essai a pour objectif de montrer l'influence de l'accord d'indice sur les propriétés optiques du vitrage telles que :

- les valeurs de transmission lumineuse $T_L$ dans le visible en %, mesurée selon la norme ISO 9050:2003 (illuminant D65 ; 2° Observateur),
- les valeurs de flou en transmission (Haze T) en %, mesuré avec un hazemeter selon la norme ASTM D 1003 pour un rayonnement incident sur l'élément en couches du côté de la couche externe inférieure,
- la clarté en % avec le hazemeter Haze-Gard de BYK.

De plus, la qualité « de vision » au travers du vitrage ainsi revêtu a été évaluée visuellement par 5 observateurs à l'aveugle, c'est à dire sans que les observateurs ne connaissent les caractéristiques telles que l'indice de réfraction ou l'accord d'indice des couches sol-gel avec le substrat. Les observateurs ont attribué pour chaque substrat revêtu d'une couche sol-gel un indicateur d'appréciation choisi parmi : « - » non correcte, « + » correcte, « ++ » bon, « +++ » excellent.

Les tableaux ci-dessous récapitulent les compositions des solutions sol-gel testées ainsi que les compositions des couches sol-gel résultantes.

Les résultats obtenus sont regroupés dans le tableau ci-dessus.

| Couche sol-gel | Indice 589 nm | $\Delta$n | TL (%) | Flou (%) | Clarté (%) | Observation visuelle | | | | |
|---|---|---|---|---|---|---|---|---|---|---|
| | | | | | | P1 | P2 | P3 | P4 | P5 |
| G | 1,623 | -0,105 | - | - | 20,7 | - | - | - | - | - |
| E | 1,566 | -0,048 | - | - | 76,9 | - | - | - | - | - |
| D | 1,557 | -0,039 | - | - | 87,4 | - | + | ++ | ++ | ++ |
| P | 1,532 | -0,014 | 89,8 | 0,3 | 94 | + | + | + | ++ | ++ |
| C | 1,529 | -0,010 | - | - | 97,5 | ++ | ++ | ++ | ++ | ++ |
| O | 1,524 | -0,006 | 90,0 | 0,5 | 98 | +++ | +++ | +++ | +++ | +++ |
| B | 1,517 | 0,002 | - | - | 98 | +++ | +++ | +++ | +++ | +++ |
| N | 1,514 | 0,000 | 89,8 | 0,5 | 100 | +++ | +++ | +++ | +++ | +++ |
| M | 1,508 | 0,010 | 90,0 | 0,5 | 98 | ++ | ++ | ++ | ++ | ++ |
| L | 1,504 | 0,014 | 89,6 | 0,4 | 96 | ++ | ++ | ++ | ++ | ++ |
| K | 1,500 | 0,018 | 90,0 | 0,5 | 93 | - | + | ++ | ++ | ++ |
| A | 1,493 | 0,025 | 89,9 | 1,1 | 90 | - | - | - | - | - |
| Q | 1,484 | 0,03 | 89,5 | 1,6 | 78 | - | - | - | - | - |
| R | 1,476 | 0,038 | 89,5 | 3,5 | 68 | - | - | - | - | - |
| S | 1,468 | 0,046 | 89,5 | 2,9 | 60 | - | - | - | - | - |
| $\Delta$n représente la variation d'indice entre le substrat Satinovo® et la couche sol gel. | | | | | | | | | | |

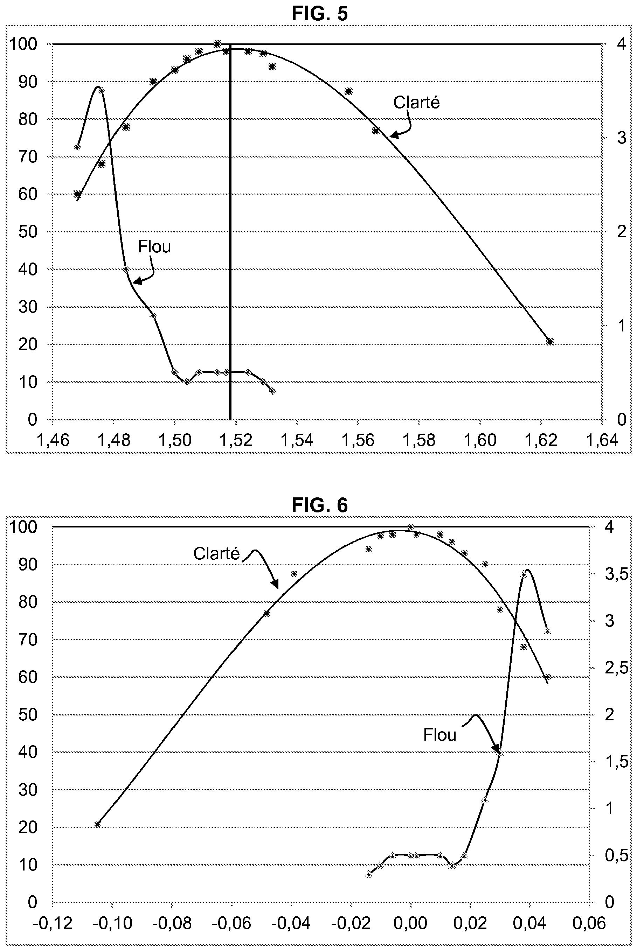

La figure 5 est un graphique montrant l'évolution du flou (axe des ordonnées situé à droite) et de la clarté (axe des ordonnées situé à gauche) en fonction de l'indice de réfraction de la couche sol-gel. Le trait noir vertical illustre l'indice du substrat de verre Satinovo®.

La figure 6 est un graphique montrant l'évolution du flou (axe des ordonnées situé à droite) et de la clarté (axe des ordonnées situé à gauche) en fonction de la variation d'indice de réfraction entre le substrat Satinovo® et la couche sol-gel.

Lorsque la couche sol-gel a un indice compris entre 1,500 et 1,530 on obtient des valeurs de flou au travers du substrat ainsi revêtu inférieures à 0,5%. Toutefois, les valeurs de flou à elles seules ne suffisent pas pour caractériser l'excellence de la vision. C'est pourquoi la clarté a également été déterminée. On constate que contrairement aux valeurs de flou qui sont quasiment constantes dans la gamme d'indice indiqué, les valeurs de clarté traduisent à l'intérieur de cette gamme un pic centré pour des valeurs d'indice de réfraction de la couche sol-gel autour de la valeur de l'indice du substrat soit 1,518. Plus particulièrement, de bons résultats sont obtenus pour un écart d'indice inférieur à 0,020 et d'excellents résultats pour un écart d'indice inférieur à 0,015, voire inférieur à 0,005.

En conclusion, la valeur absolue de la différence d'indice entre le substrat d'indice $n_1$ et la couche sol-gel d'indice $n_2$ est de préférence inférieure à 0,020, mieux inférieure à 0,015 et encore mieux inférieure à 0,013 afin d'obtenir une bonne transparence des motifs.

**Revendications**

1. Vitrage comprenant un substrat ayant deux surfaces principales externes dont l'une au moins est une surface texturée, constitué en un matériau diélectrique ayant un indice de réfraction $n_1$ **caractérisé en ce que** :

   - au moins une partie de la surface texturée du substrat est revêtu d'une couche sol-gel constituée en un matériau diélectrique ayant un indice de réfraction $n_2$,
   - la valeur absolue de la différence d'indice de réfraction à 589 nm entre les matériaux diélectriques constitutifs du substrat et de la couche sol-gel est inférieure ou égale à 0,020.

2. Vitrage selon la revendication 1 **caractérisé en ce que** le substrat a deux surfaces principales externes, dont l'une au moins est une surface texturée et l'autre est une surface lisse.

3. Vitrage selon la revendication 1 ou 2 **caractérisé en ce que** la surface texturée du substrat présente un paramètre de rugosité Ra d'au moins 0,5 $\mu$m.

4. Vitrage selon l'une quelconque des revendications précédentes **caractérisé en ce que** la partie de la surface texturée du substrat comprenant une couche sol-gel définit un motif transparent.

5. Vitrage selon l'une quelconque des revendications précédentes **caractérisé en ce que** l'épaisseur de la couche sol-gel est supérieure ou égale à la hauteur pic à vallée de la surface texturée du substrat.

6. Vitrage selon l'une quelconque des revendications précédentes **caractérisé en ce que** la surface texturée du substrat revêtu d'une couche sol-gel présente un paramètre de rugosité Ra inférieur à 0,1 $\mu$m.

7. Vitrage selon l'une quelconque des revendications précédentes **caractérisé en ce que** la couche sol-gel comprend une matrice hybride organique/inorganique à base de silice.

8. Vitrage selon la revendication 6 **caractérisé en ce que** la couche sol-gel comprend en outre des particules d'au moins un oxyde métallique ou d'au moins un chalcogénure.

9. Vitrage selon la revendication 7 ou 8 **caractérisé en ce que** la matrice hybride organique/inorganique à base de silice comprend en outre au moins un oxyde métallique.

10. Vitrage l'une quelconque des revendications 8 ou 9 **caractérisé en ce que** l'oxyde métallique comprend un métal choisi parmi le titane, le zirconium, le zinc, le niobium, l'aluminium et le molybdène.

11. Vitrage selon l'une quelconque des revendications précédentes **caractérisé en ce que** la couche sol-gel comprend une matrice hybride organique/inorganique de silice et d'oxyde de zirconium dans laquelle sont dispersées des particules de dioxyde de titane.

12. Vitrage selon l'une quelconque des revendications précédentes **caractérisé en ce que** la partie de la surface texturée du substrat comprenant une couche sol-gel présente un flou en transmission inférieur à 5% et/ou une clarté supérieure à 93%.

13. Vitrage selon l'une quelconque des revendications précédentes **caractérisé en ce que** la partie de la surface texturée du substrat ne comprenant pas une couche sol-gel présente un flou en transmission supérieur à 15% et/ou une clarté inférieure à 90%.

14. Vitrage selon l'une quelconque des revendications précédentes **caractérisé en ce que** le substrat est un substrat en verre ou en vitrocéramique.

15. Procédé de fabrication d'un vitrage selon l'une quelconque des revendications précédentes **caractérisé en ce que** :

   - on fournit un substrat comprenant une surface texturée d'indice de réfraction $n_1$,

- on choisit et on dépose sur au moins une partie de la surface texturée du substrat, une couche sol-gel constituée en un matériau diélectrique ayant un indice de réfraction $n_2$ dont la valeur absolue de la différence d'indice de réfraction à 589 nm entre les matériaux diélectriques constitutifs du substrat et de la couche sol-gel est inférieure ou égale à 0,020, de préférence inférieure ou égale 0,015.

**Patentansprüche**

1. Verglasung, die ein Substrat umfasst, das zwei externe Hauptoberflächen hat, von welchen mindestens eine eine texturierte Oberfläche ist, die aus einem dielektrischen Material besteht, das einen Brechungsindex $n_1$ hat, **dadurch gekennzeichnet, dass**:

   - mindestens ein Teil der texturierten Oberfläche des Substrats mit einer Sol-Gel-Schicht beschichtet ist, die aus einem dielektrischen Material besteht, das einen Brechungsindex $n_2$ hat,
   - wobei der Absolutwert des Brechungsindexunterschieds bei 589 nm zwischen den dielektrischen Materialien, die das Substrat bilden, und der Sol-Gel-Schicht kleiner oder gleich 0,020 ist.

2. Verglasung nach Anspruch 1, **dadurch gekennzeichnet, dass** das Substrat zwei externe Hauptoberflächen hat, von welchen mindestens eine eine texturierte Oberfläche ist und die andere eine glatte Oberfläche ist.

3. Verglasung nach Anspruch 1 oder 2, **dadurch gekennzeichnet, dass** die texturierte Oberfläche des Substrats einen Rauheitsparameter Ra von mindestens 0,5 $\mu$m aufweist.

4. Verglasung nach einem der vorhergehenden Ansprüche, **dadurch gekennzeichnet, dass** der Teil der texturierten Oberfläche des Substrats, der eine Sol-Gel-Schicht umfasst, ein durchsichtiges Muster definiert.

5. Verglasung nach einem der vorhergehenden Ansprüche, **dadurch gekennzeichnet, dass** die Stärke der Sol-Gel-Schicht größer oder gleich der Höhe von Spitze bis Tal der texturierten Oberfläche des Substrats ist.

6. Verglasung nach einem der vorhergehenden Ansprüche, **dadurch gekennzeichnet, dass** die texturierte Oberfläche des Substrats, das mit einer Sol-Gel-Schicht beschichtet ist, einen Rauheitsparameter Ra kleiner als 0,1 $\mu$m aufweist.

7. Verglasung nach einem der vorhergehenden Ansprüche, **dadurch gekennzeichnet, dass** die Sol-Gel-Schicht eine Organisch/Anorganisch-Hybridmatrix auf Siliziumdioxidbasis umfasst.

8. Verglasung nach Anspruch 6, **dadurch gekennzeichnet, dass** die Sol-Gel-Schicht außerdem Partikel mindestens eines Metalloxids oder mindestens eines Chalkogenids umfasst.

9. Verglasung nach Anspruch 7 oder 8, **dadurch gekennzeichnet, dass** die Organisch/Anorganisch-Hybridmatrix auf Siliziumdioxidbasis außerdem mindestens ein Metalloxid umfasst.

10. Verglasung nach einem der Ansprüche 8 oder 9, **dadurch gekennzeichnet, dass** das Metalloxid ein Metall umfasst, das aus Titan, Zirkonium, Zink, Niobium, Aluminium und Molybdän ausgewählt ist.

11. Verglasung nach einem der vorhergehenden Ansprüche, **dadurch gekennzeichnet, dass** die Sol-Gel-Schicht eine Organisch/Anorganisch-Siliziumdioxid- und Zirkoniumoxid-Hybridmatrix umfasst, in der Titandioxidpartikel verstreut sind.

12. Verglasung nach einem der vorhergehenden Ansprüche, **dadurch gekennzeichnet, dass** der Teil der texturierten Oberfläche des Substrats, der eine Sol-Gel-Schicht umfasst, eine Übertragungsunschärfe kleiner als 5 % und/oder eine Klarheit größer als 93 % aufweist.

13. Verglasung nach einem der vorhergehenden Ansprüche, **dadurch gekennzeichnet, dass** der Teil der texturierten Oberfläche des Substrats, der keine Sol-Gel-Schicht umfasst, eine Übertragungsunschärfe größer als 15 % und/oder eine Klarheit kleiner als 90 % aufweist.

14. Verglasung nach einem der vorhergehenden Ansprüche, **dadurch gekennzeichnet, dass** das Substrat ein Substrat aus Glas oder aus Glaskeramik ist.

**15.** Verfahren zum Herstellen einer Verglasung nach einem der vorhergehenden Ansprüche, **dadurch gekennzeichnet, dass**:

- ein Substrat geliefert wird, das eine texturierte Oberfläche mit Brechungsindex $n_1$ umfasst,
- eine Sol-Gel-Schicht ausgewählt und auf mindestens einem Teil der texturierten Oberfläche des Substrats abgeschieden wird, die aus einem dielektrischen Material besteht, das einen Brechungsindex $n_2$ hat, dessen Absolutwert des Brechungsindexunterschieds bei 589 nm zwischen den dielektrischen Materialien, die das Substrat bilden, und der Sol-Gel-Schicht kleiner oder gleich 0,020, bevorzugt kleiner oder gleich 0,015 ist.

**Claims**

**1.** A glazing comprising a substrate having two main outer surfaces, at least one of which is a textured surface, consisting of a dielectric material having a refractive index $n_1$, **characterized in that**:

- at least a part of the textured surface of the substrate is coated with a sol-gel layer consisting of a dielectric material having a refractive index $n_2$,
- the absolute value of the difference in refractive index at 589 nm between the constituent dielectric materials of the substrate and the sol-gel layer is less than or equal to 0.020.

**2.** The glazing as claimed in claim 1, **characterized in that** the substrate has two main outer surfaces, at least one of which is a textured surface and the other is a smooth surface.

**3.** The glazing as claimed in claim 1 or 2, **characterized in that** the textured surface of the substrate has a roughness parameter Ra of at least 0.5 $\mu$m.

**4.** The glazing as claimed in any one of the preceding claims, **characterized in that** the part of the textured surface of the substrate comprising a sol-gel layer defines a transparent design.

**5.** The glazing as claimed in any one of the preceding claims, **characterized in that** the thickness of the sol-gel layer is greater than or equal to the peak-to-valley height of the textured surface of the substrate.

**6.** The glazing as claimed in any one of the preceding claims, **characterized in that** the textured surface of the substrate coated with a sol-gel layer has a roughness parameter Ra of less than 0.1 $\mu$m.

**7.** The glazing as claimed in any one of the preceding claims, **characterized in that** the sol-gel layer comprises a silica-based organic/inorganic hybrid matrix.

**8.** The glazing as claimed in claim 6, **characterized in that** the sol-gel layer also comprises particles of at least one metal oxide or of at least one chalcogenide.

**9.** The glazing as claimed in claim 7 or 8, **characterized in that** the silica-based organic/inorganic hybrid matrix also comprises at least one metal oxide.

**10.** The glazing as claimed in either of claims 8 and 9, **characterized in that** the metal oxide comprises a metal chosen from titanium, zirconium, zinc, niobium, aluminum and molybdenum.

**11.** The glazing as claimed in any one of the preceding claims, **characterized in that** the sol-gel layer comprises an organic/inorganic hybrid matrix of silica and of zirconium oxide in which are dispersed titanium dioxide particles.

**12.** The glazing as claimed in any one of the preceding claims, **characterized in that** the part of the textured surface of the substrate comprising a sol-gel layer has a transmission haze of less than 5% and/or a lightness of greater than 93%.

**13.** The glazing as claimed in any one of the preceding claims, **characterized in that** the part of the textured surface of the substrate not comprising a sol-gel layer has a transmission haze of greater than 15% and/or a lightness of less than 90%.

**14.** The glazing as claimed in any one of the preceding claims, **characterized in that** the substrate is a glass or vitroceramic substrate.

**15.** A process for manufacturing a glazing as claimed in any one of the preceding claims, **characterized in that**:

- a substrate comprising a textured surface of refractive index $n_1$ is provided,
- a sol-gel layer consisting of a dielectric material having a refractive index $n_2$, for which the absolute value of the difference in refractive index at 589 nm between the constituent dielectric materials of the substrate and of the sol-gel layer is less than or equal to 0.020 and preferably less than or equal to 0.015, is chosen and deposited on at least a part of the textured surface of the substrate.

1

4    4A

Figure 1

2

2A

1

4    4A

Figure 2

2A

## FIG. 3

## FIG. 4

## FIG. 5

## FIG. 6

**RÉFÉRENCES CITÉES DANS LA DESCRIPTION**

**Documents brevets cités dans la description**

- WO 2010112786 A
- WO 2010112788 A